# EUROPEAN PATENT SPECIFICATION

(11) **EP 3 574 237 B1**
(45) Date of publication and mention of the grant of the patent: **03.03.2021**
(21) Application number: 17704047.4
(22) Date of filing: 26.01.2017
(51) Int. Cl.: F16J 15/40, F16J 15/447

(54) **A SHAFT SEALING ASSEMBLY IN AN INTERNAL COMBUSTION ENGINE**
EINE WELLENDICHTUNGSANORDNUNG IN EINEM VERBRENNUNGSMOTOR
UN ENSEMBLE D'ÉTANCHÉITÉ D'ARBRE DANS UN MOTEUR À COMBUSTION INTERNE

(43) Date of publication of application: 04.12.2019
(73) Proprietor: Wärtsilä Finland Oy, 65100 Vaasa (FI)
(72) Inventor: NEIRO, Juha, FI-65100 Vaasa (FI)
(74) Representative: Genip Oy
(86) International application number: PCT/FI2017/050041
(87) International publication number: WO 2018/138404

(56) References cited:
- WO-A1-2016/173842
- GB-A- 274 049
- JP-A- S6 049 170
- US-A- 3 251 601

## Description

### Technical field

The present invention relates to a sealing assembly in an internal combustion engine where the internal combustion engine is provided with a body which borders an internal space of the engine from an outside space and where a rotatable shaft is arranged to extend through an opening in the body.

### Background art

It is well known in the art of internal combustion piston engines, that such an engine comprises one or more shafts which extend outside from the body of the engine. Often, there is a bearing arranged in connection with the lead through of the shaft for supporting the shaft rotationally to the body, but at least there must be some kind of a sealing between the rotational shaft and stationary body to prevent, or at least minimize entering of fouling material into the engine and/or leaking of lubrication medium or other fluid present in the engine inside the engine at the vicinity of the lead through.

Similar problem may arise between different compartments inside the engine where different fluids are at opposite sides of the body wall through which the shaft is running.

JP S 6049170 A discloses a labyrinth sealing system for a shaft which proposes to eliminate the need of a blower for sealing air by boring an axial hole through a rotary shaft, and connecting one side of the hole to a labyrinth chamber through a radial hole so that sealing air is supplied to the labyrinth chamber by centrifugal force produced by rotation of the rotary shaft. This solution requires that the end of the shaft must be open so as to allow the air flow. Additionally the borings in the shaft decreases considerably the strength of the shaft.

US 3251601 A discloses a labyrinth seal between stationary blading and the rotor structure of an axial-flow turbine. The labyrinth seal is defined by rim and shroud and is provided to minimize leakage of motive fluid from the high pressure side of the vanes to the low pressure side.

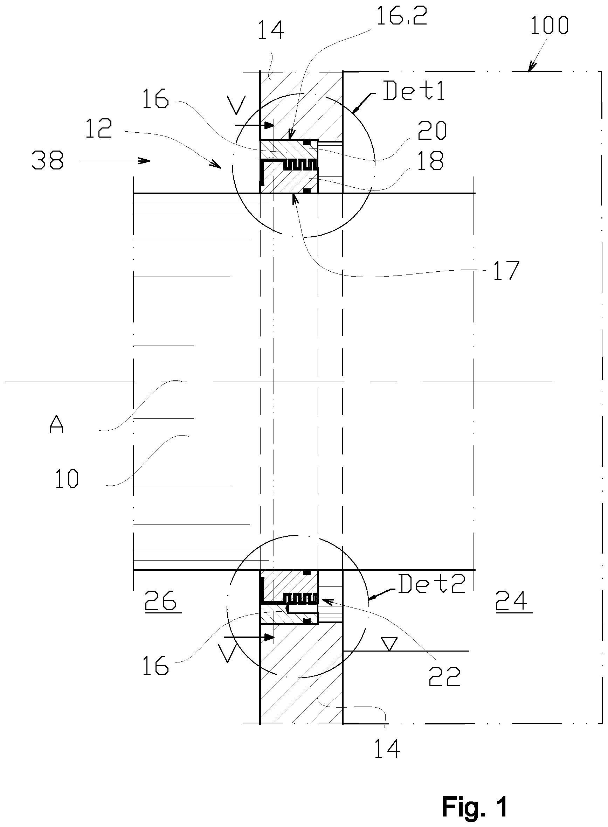

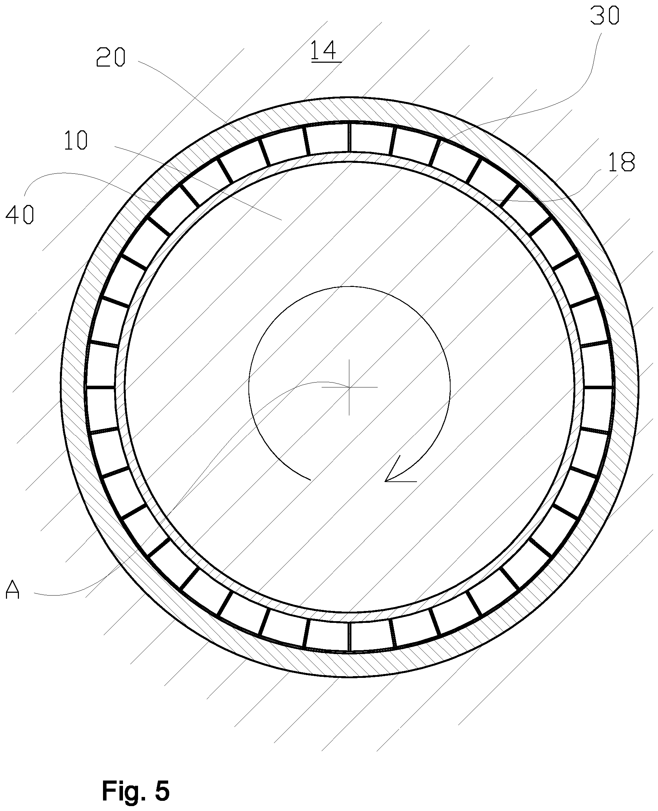

GB 274049 A discloses a stuffing box which is capable of ensuring a tight and effective joint under high pressure between the shaft and casing of centrifugal pumps, steam and water turbines and the like. There is shown a labyrinth seal comprising slots between stationary rings and revolving rings, which are inclined outwards towards the higher pressure, in order that the centrifugal force may oppose the leakage flow Using the language of claim 1 of the present patent application, GB 274049 A may be said to disclose:
A sealing assembly with a body (I, fig.1) which borders an internal space (right-hand side in figure 1) from an outside space (left-hand side in figure 1) and where a rotatable shaft (h) is arranged to extend through an opening in the body, the opening in the body (I) being provided with a non contact shaft sealing arrangement (fig.1 and 5) comprising a labyrinth seal and having a stator part (d, a) and a rotor part (e) comprising a blower means (r, fig.6; p.3, 1.73-96) arranged to the rotor part of the shaft sealing arrangement at a first axial end (on the left-hand side in figure 1) thereof configured to induce a counter pressure to the labyrinth seal, and that the labyrinth seal is provided with a fluid outlet (space between stator and rotor) which comprises a collector chamber (space between stator blades a), the rotor part being arranged radially inside the stator part.

WO 2016/173842 A1 discloses a device having a rotatable shaft which is mounted in a stationary housing with the aid of at least one shaft bearing, wherein the shaft bearing is lubricated with a lubricant, preferably oil. According to the invention, in addition to the shaft bearing, a fan is fastened on the shaft, by way of which fan a positive pressure is generated during rotation of the shaft in the region between the fan and the shaft bearing, with the result that an escape of lubricant is prevented or at least reduced as a result.

An object of the invention is to provide a sealing assembly in an internal combustion engine, in which performance is considerably improved compared to the prior art solutions.

### Disclosure of the Invention

Objects of the invention can be met substantially as is disclosed in the independent claims and in the other claims describing more details of different embodiments of the invention.

According to an embodiment of the invention a sealing assembly in an internal combustion engine, where the internal combustion engine is provided with a body which borders an internal space of the engine from an outside space and where a rotatable shaft is arranged to extend through an opening in the body, and the opening is provided with a non-contact shaft sealing arrangement comprising a labyrinth seal and having a stator part and a rotor part comprising a blower means arranged to the rotor part of the shaft sealing arrangement at a first axial end thereof configured to induce a counter pressure to the labyrinth seal, and where the labyrinth seal is provided with a fluid outlet which comprises a collector chamber extending in axial direction via each one of grooves in the stator part of the labyrinth seal. This way the fluid collected by the labyrinth seal may be discharged back to the engine.

Advantageously the internal space of the engine is a crank case of the engine.

This way to combined sealing effect of the shaft seal is improved because the blower means creates a counter pressure to the labyrinth seal effectively minimizing the possibility of fluid leak through the seal. Additionally the shaft seal does not affect to the shaft itself since all the necessary functions are provided by the shaft seal according to the invention.

According to an embodiment of the invention the stator part of the shaft seal arrangement is provided with a housing for the blower means. The cross sectional shape of which housing conforms to the shape of a vane of the blower means. The form of the vanes and the inner housing may be designed in a suitable manner according to the desired effect of the blower means and the nominal rotational speed of the shaft - or an engine - where the shaft seal arrangement is intended to be used.

According to an embodiment of the invention the rotor part is arranged radially inside the stator part.

According to an embodiment of the invention the blower means is a radial blower means comprising radially extending vanes. The blower means is provided with an annular gas inlet gap at the first axial end of the shaft seal arrangement, and at a first radial distance from the internal perimeter surface of the shaft seal arrangement, and that the radial blower means is further provided with an annular gas outlet at second radial distance from the the internal perimeter surface of the shaft seal arrangement, wherein the second radial distance is greater than the first radial distance.

According to an embodiment of the invention the stator part is provided with a radial extension wall at the first axial end of the shaft seal arrangement arranged to extend towards the longitudinal center axis of the shaft seal arrangement forming the gas inlet gap together with rotor part.

According to an embodiment of the invention annular gas outlet of the blower means opens into an axial end of the labyrinth seal inside the seal.

According to an embodiment of the invention the labyrinth seal and the blower means are arranged axially one after the other in the direction of the longitudinal axis of the shaft seal arrangement.

The exemplary embodiments of the invention presented in this patent application are not to be interpreted to pose limitations to the applicability of the appended claims. Even if the blower means is advantageously a radial blower it can be configured as an axial blower.

The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in particular in the appended claims.

### Brief Description of Drawings

In the following, the invention will be described with reference to the accompanying exemplary, schematic drawings, in which
Figure 1 illustrates a non-contact seal arrangement according to an embodiment of the invention,
Figure 2 illustrates the detail views Det1 and Det2 of the figure 1,
Figure 3 illustrates an embodiment of a rotor part of the non-contact seal arrangement of the figure 1,
Figure 4 illustrates an enlarged partial section of a front view of the figure 1, and
Figure 5 illustrates a sectional view V-V of the figure 1.

### Detailed Description of Drawings

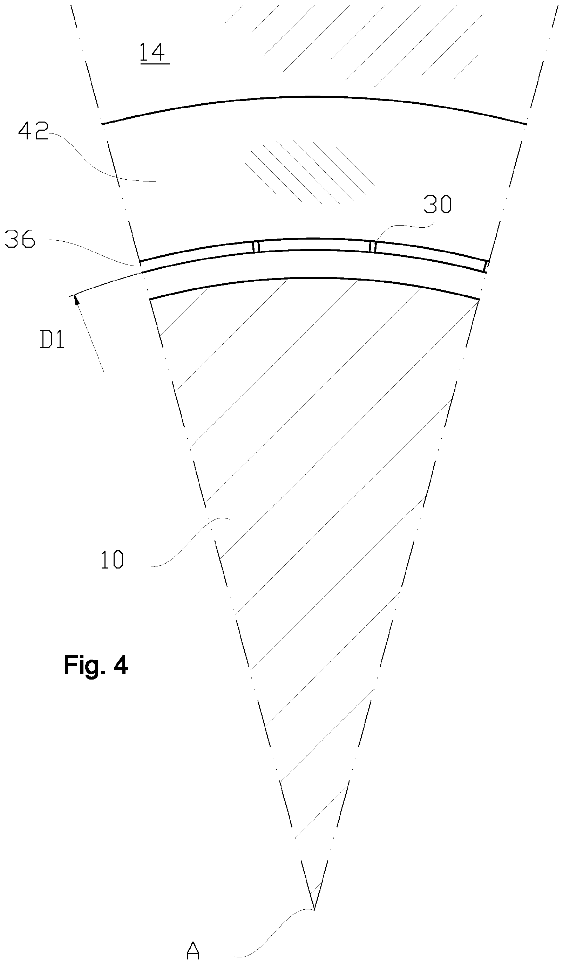

With the general reference to the Figures 1, 2, 4 and 5 a non-contact shaft seal 16 is arranged on a shaft 10 which extends through an opening 12 in a wall 14. The shaft is of circular cross section and it has a central axis A running in the longitudinal direction of the shaft 10. There is non-contact shaft seal arrangement 16 arranged to the gap between the shaft 10 and the perimeter of the opening 12. Advantageous also the opening 12 in the wall 14 is circular and therefore the gap is respectively of annular form. The shaft seal arrangement 16 comprises a rotor part 18 and a stator part 20. The stator part is coupled to the wall 14 releasably in immobile manner. The rotor part is coupled to the shaft releasably to be rotated along with the shaft. The rotor part is arranged radially inside the stator part wherein the radial direction refers to the fact that seal assembly is of circular form has a central axis A common with the shaft running in the longitudinal direction of the shaft 10. The internal perimeter surface 17 of the shaft seal arrangement is adapted to conform to the surface of the shaft and the outer perimeter surface 17 is respective adapted to conform to the shape of the opening in the wall 14. Here both the surfaces are cylindrical. The seal arrangement 16 comprises a labyrinth seal 22 which is arranged between the rotor part 18 and the stator part 20. Here the wall 14 belongs to a body of an internal combustion piston engine 100 which wall borders an internal space 24 from an outside space 26. Thus the shaft 10 extends through the body of the engine 100, which is also commonly referred to as a block. The sectional view V-V of the figure 1 is shown in the figure 5. In the figure 4 there is shown an enlarged section of a front view (seen from the left) of the figure 1 which front view also represent the first side of the shaft seal. The rotor part 18 and stator part 20 are provided with o-ring assemblies 23 for sealing the other rim of the seal arrangement 16.

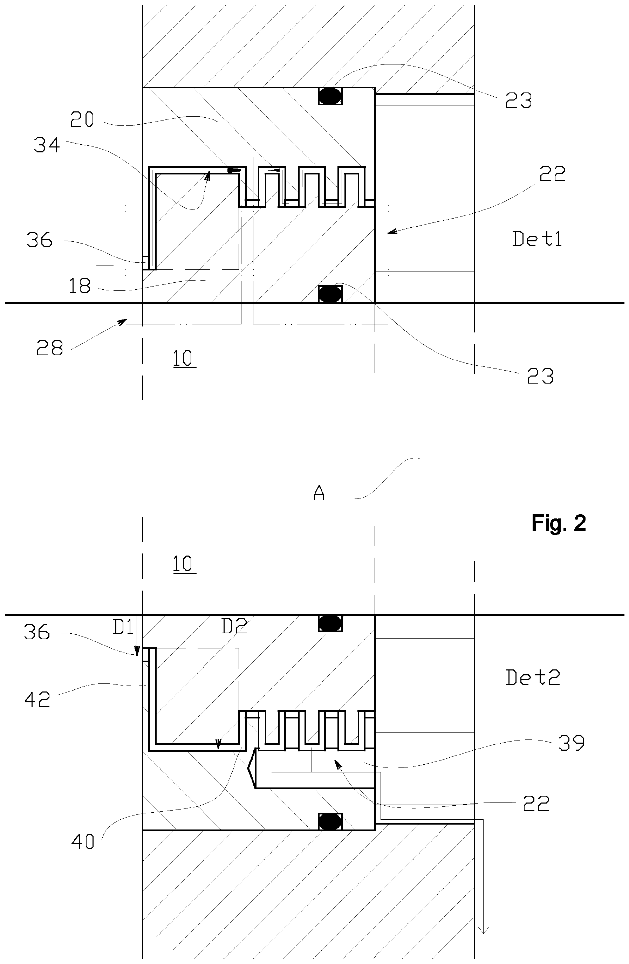

The labyrinth seal 22 can be seen in more detailed manner in the figure 2 which shows the details Det1 and Det2 of the figure 1. A labyrinth seal 22 is a type of mechanical seal that provides a tortuous path to minimize leakage of the oil from the engine 100.

The labyrinth seal 22 is composed of a number of grooves forming a number of radial extensions, called here also a blades 32, between the grooves. The blades arranged to the rotor part are at the longitudinal locations of the grooves in the stator part. The blades have radially overlapping distal ends in the labyrinth seal so that the possible escaping fluid has to pass through a long and difficult path to escape.

Labyrinth seal 22 provides a non-contact sealing action by controlling the passage of fluid through a variety of chambers by centrifugal motion, as well as by the formation of controlled fluid vortices. At higher speeds, centrifugal motion forces the fluid towards the radial distal end of the grooves and therefore away from any passages. Because the labyrinth seal is of non-contact type, it is not subjected do any wear. The labyrinth seal 22 is also provided with a fluid outlet 39 which comprises a collector chamber extending in axial direction via each one of the grooves in the stator part such that the fluid collected by the labyrinth seal may be discharged back to the engine 100. When installed correctly, the fluid outlet is at lowest possible position.

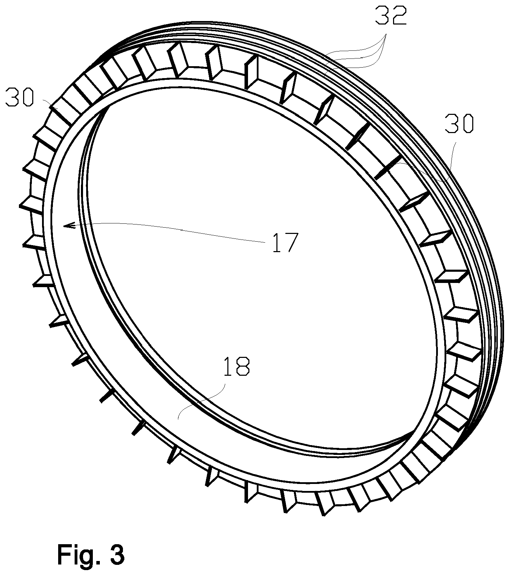

As is also seen from the figures 1 and 2 the seal arrangement further comprises a blower means, which in the figures is shown as a radial blower. The blower means 28 can also be developed to be an axial blower. The blower means 28 comprises radially extending vanes 30 which are best shown in the figure 3 which shows the rotor part 18 of the shaft seal arrangement alone without the stator part. Instead of being planar, the vanes 30 may be also suitably curved or otherwise formed to provide desired blowing effect. The radial extensions i.e. the blades 32 arranged to the rotor part 18, which form the labyrinth seal at their parts, are also shown more clearly in the figure 3.

Now turning back to the figure 2 the non-contact shaft seal arrangement 16, and particularly the stator part 20 is provided with a housing 34 for the vanes of the blower means 28, wherein the cross sectional shape of the housing conforms with the shape of the vane of the blower means. Naturally there is a gap provided between the vanes and the housing to facilitate the rotation of the rotor part 20.

As is best seen in the figure 2 the radial blower means is provided with an annular gas inlet gap 36 at the first axial end 38 of the shaft seal arrangement 16, and at a first radial distance D1 from the internal perimeter surface 17 of the shaft seal arrangement, which is also the internal perimeter surface of the rotor part 18. The radial blower means 28 is further provided with an annular gas outlet 40 at second radial distance D2 from the internal perimeter surface 17 of the shaft seal arrangement 17, wherein the second radial distance D2 is greater than the first radial distance D1. The annular gas outlet 40 of the blower means 28 opens into the labyrinth seal 22, particularly to an axial end thereof. This way, when the shaft is rotating, the blower provides pressure effect to the labyrinth seal 22 and therefore enhances the sealing effect of the labyrinth seal 22.

The stator part 20 is provided with a radial extension wall 42 at the first axial end 38 of the shaft seal arrangement 16 which wall is arranged to extend towards the longitudinal center axis A of the shaft seal arrangement forming the gas inlet gap 36 together with rotor part 18. The radial extension wall forms also partially the housing 34 of the blower means 28.

As can be seen from the figures the labyrinth seal 22 and the blower means 28 of the shaft sealing arrangement 16 are arranged axially one after the other in the direction of the longitudinal axis A of the sealing arrangement.

The shaft seal described herein is particularly intended to be used in a sealing assembly in an internal combustion engine 100 where the internal combustion engine 100 is provided with a body 14 which borders an internal space 24 of the engine 100 from an outside space 25 and where a rotatable shaft 10 is arranged to extend through an in the body 14, and where the opening 12 is provided with a non-contact shaft sealing arrangement 16 assembled the first axial end 28 facing at outside space 25 of the engine 100.

Advantageously the internal space of the engine 100 is a crank case of the engine 100. The shaft seal provides also advantageous effects even if used in a wall between to spaces inside the engine 100, as well.

According to an embodiment of invention the stator part 20 is an assembly of at least two half-circular parts, which facilitate the installation of the stator part around the rotor part.

According to an embodiment of the invention the blades in the rotor part or in the stator part are made of elastic material the bending capability of which facilitate the installation of the stator part around the rotor part.

According to an embodiment of the invention the non-contact shaft seal arrangement, including the rotor part and the stator part is manufactured for example by means of 3D printing or casting from metal or suitable polymer.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. An internal combustion engine (100) containing a sealing assembly, the internal combustion engine being provided with a body (14) which borders an internal space (24) of the engine from an outside space (25) and where a rotatable shaft (10) is arranged to extend through an opening (12) in the body, wherein the opening (12) in the body of the engine (100) is provided with a non-contact shaft sealing arrangement (16) comprising a labyrinth seal (22) and having a stator part (20) and a rotor part (18) comprising a blower means (28) arranged to the rotor part (18) of the shaft sealing arrangement (16) at a first axial end (38) thereof facing at outside space of the engine (100), the blower means (28) being configured to induce a counter pressure to the labyrinth seal (22), and the labyrinth seal (22) being provided with a fluid outlet (39) which comprises a collector chamber extending in axial direction via each one of grooves in the stator part of the labyrinth seal, such that the fluid collected by the labyrinth seal may be discharged back to the engine (100), and such that, when installed correctly, the fluid outlet is at lowest possible position, the rotor part (18) being arranged radially inside the stator part (20).

2. An internal combustion engine according to claim 1, wherein the internal space of the engine (100) is a crank case of the engine (100).

3. An internal combustion engine according to claim 1, wherein the blower means is a radial blower (28).

4. An internal combustion engine according to claim 1, wherein the blower means comprises radially extending vanes (30).

5. An internal combustion engine according to claim 1, wherein the stator part (20) of the shaft seal arrangement is provided with a housing (34) for the blower means (28), wherein the cross sectional shape of which housing conforms to the shape of a vane of the blower means.

6. An internal combustion engine according to claim 1, wherein the blower means (28) is radial and is provided with an annular gas inlet gap (36) at the first axial end (38) of the shaft sealing arrangement (16), and at a first radial distance (D1) from the internal perimeter surface (17) of the shaft seal arrangement (16), and that the radial blower means (28) is further provided with an annular gas outlet (40) at a second radial distance (D2) from the internal perimeter surface (17) of the shaft seal arrangement, wherein the second radial distance (D2) is greater than the first radial distance (D1).

7. An internal combustion engine according to claim 6, wherein the stator part (20) is provided with a radial extension wall (42) at the first axial end (38) of the shaft sealing arrangement (16) arranged to extend towards the longitudinal center axis (A) of the shaft seal arrangement forming the gas inlet gap (36) together with rotor part (18).

8. An internal combustion engine according to claim 6, wherein the annular gas outlet (40) opens into an axial end of the labyrinth seal (22).

9. An internal combustion engine according to claim 1, wherein the labyrinth seal (22) and the blower means (28) are arranged axially one after the other in a direction of a longitudinal axis (A) of the shaft sealing arrangement (16).

## Patentansprüche

1. Verbrennungsmotor (100), der eine Abdichtungsanordnung enthält, wobei der Verbrennungsmotor mit einem Körper (14) versehen ist, der an einen Innenraum (24) des Motors von einem Außenseitenraum (25) angrenzt, und wo eine drehbare Welle (10) eingerichtet ist, um sich durch eine Öffnung (12) in dem Körper zu erstrecken, wobei die Öffnung (12) in dem Körper des Motors (100) mit einer berührungsfreien Wellenabdichtungsanordnung (16) versehen ist, die eine Labyrinthdichtung (22) umfasst und einen Statorteil (20) und einen Rotorteil (18) aufweist, der ein Gebläsemittel (28) umfasst, das an dem Rotorteil (18) der Wellenabdichtungsanordnung (16) an einem ersten axialen Ende (38) davon eingerichtet ist, das einem Außenseitenraum des Motors (100) zugewandt ist, wobei das Gebläsemittel (28) dazu konfiguriert ist, einen Gegendruck zu der Labyrinthdichtung (22) zu induzieren, und die Labyrinthdichtung (22) mit einem Fluidauslass (39) versehen ist, der eine Sammelkammer umfasst, die sich in axialer Richtung über jede der Nuten in dem Statorteil der Labyrinthdichtung derart erstreckt, dass das Fluid, das von der Labyrinthdichtung gesammelt wird, zu dem Motor (100) zurück ausgelassen werden kann, und derart, dass der Fluidauslass, wenn er korrekt installiert ist, an der niedrigsten möglichen Position liegt, wobei der Rotorteil (18) radial innerhalb des Statorteils (20) eingerichtet ist.

2. Verbrennungsmotor nach Anspruch 1, wobei der Innenraum des Motors (100) ein Kurbelgehäuse des Motors (100) ist.

3. Verbrennungsmotor nach Anspruch 1, wobei das Gebläsemittel ein Radialgebläse (28) ist.

4. Verbrennungsmotor nach Anspruch 1, wobei das Gebläsemittel sich radial erstreckende Schaufeln (30) umfasst.

5. Verbrennungsmotor nach Anspruch 1, wobei der Statorteil (20) der Wellenabdichtungsanordnung mit einem Gehäuse (34) für das Gebläsemittel (28) versehen ist, wobei die Querschnittform des Gehäuses mit der Form einer Schaufel des Gebläsemittels übereinstimmt.

6. Verbrennungsmotor nach Anspruch 1, wobei das Gebläsemittel (28) radial ist und mit einem ringförmigen Gaseinlassspalt (36) an dem ersten axialen Ende (38) der Wellenabdichtungsanordnung (16) versehen ist, und an einem ersten radialen Abstand (D1) von der Innenumkreisoberfläche (17) der Wellenabdichtungsanordnung (16), und dass das radiale Gebläsemittel (28) ferner mit einem ringförmigen Gasauslass (40) an einem zweiten radialen Abstand (D2) von der Innenumkreisoberfläche (17) der Wellenabdichtungsanordnung bereitgestellt ist, wobei der zweite radiale Abstand (D2) größer ist als der erste radiale Abstand (D1).

7. Verbrennungsmotor nach Anspruch 6, wobei der Statorteil (20) mit einer sich radial erstreckenden Wand (42) an dem ersten axialen Ende (38) der Wellenabdichtungsanordnung (16) versehen ist, die eingerichtet ist, um sich zu der Längsmittenachse (A) der Wellenabdichtungsanordnung zu erstrecken, die den Gaseinlassspalt (36) gemeinsam mit dem Rotorteil (18) bildet.

8. Verbrennungsmotor nach Anspruch 6, wobei der ringförmige Gasauslass (40) in ein axiales Ende der Labyrinthdichtung (22) öffnet.

9. Verbrennungsmotor nach Anspruch 1, wobei die Labyrinthdichtung (22) und das Gebläsemittel (28) axial nacheinander in eine Richtung einer Längsachse (A) der Wellenabdichtungsanordnung (16) eingerichtet sind.

## Revendications

1. Moteur à combustion interne (100) contenant un ensemble d'étanchéité, le moteur à combustion interne étant pourvu d'un corps (14) qui borde un espace (24) du moteur à partir d'un espace extérieur (25) et où un arbre rotatif (10) est agencé pour s'étendre à travers une ouverture (12) dans le corps, dans lequel l'ouverture (12) dans le corps du moteur (100) est pourvue d'un agencement d'étanchéité d'arbre sans contact (16) comprenant un joint à labyrinthe (22) et ayant une partie de stator (20) et une partie de rotor (18) comprenant un moyen de soufflage (28) agencé vers la partie de rotor (18) de l'agencement d'étanchéité d'arbre (16) à une première extrémité axiale (38) de celui-ci faisant face à l'espace extérieur du moteur (100), le moyen de soufflage (28) étant configuré pour induire une contre-pression sur le joint à labyrinthe (22), et le joint à labyrinthe (22) étant pourvu d'une sortie de fluide (39) qui comprend une chambre de collecteur s'étendant dans la direction axiale via chacune des rainures dans la partie de stator du joint à labyrinthe, de telle sorte que le fluide collecté par le joint à labyrinthe puisse être renvoyé vers le moteur (100), et de telle sorte que, lorsqu'elle est installée correctement, la sortie de fluide soit dans la position la plus basse possible, la partie de rotor (18) étant disposée radialement à l'intérieur de la partie de stator (20).

2. Moteur à combustion interne selon la revendication 1, dans lequel l'espace du moteur (100) est un carter du moteur (100).

3. Moteur à combustion interne selon la revendication 1, dans lequel le moyen de soufflage est un ventilateur radial (28).

4. Moteur à combustion interne selon la revendication 1, dans lequel le moyen de soufflage comprend des aubes (30) s'étendant radialement.

5. Moteur à combustion interne selon la revendication 1, dans lequel la partie de stator (20) de l'agencement de joint d'arbre est pourvue d'un logement (34) pour le moyen de soufflage (28), dans lequel la forme en coupe transversale de ce logement se conforme à la forme d'une aube du moyen de soufflage.

6. Moteur à combustion interne selon la revendication 1, dans lequel le moyen de soufflage (28) est radial et est pourvu d'un espace d'entrée de gaz (36) à la première extrémité axiale (38) de l'agencement d'étanchéité d'arbre (16) et à une première distance radiale (D1) de la surface périphérique interne (17) de l'agencement d'étanchéité d'arbre (16), et en ce que le moyen de ventilateur radial (28) est en outre pourvu d'une sortie de gaz annulaire (40) à une deuxième distance radiale (D2) de la surface périphérique interne (17) de l'arbre un agencement de joint, dans lequel la deuxième distance radiale (D2) est supérieure à la première distance radiale (D1).

7. Moteur à combustion interne selon la revendication 6, dans lequel la partie de stator (20) est pourvue d'une paroi d'extension radiale (42) à la première extrémité axiale (38) de l'agencement d'étanchéité d'arbre (16) disposé pour s'étendre vers l'axe central longitudinal (A) de l'agencement d'étanchéité d'arbre ensemble l'espace d'entrée de gaz (36) conjointement à la partie de rotor (18).

8. Moteur à combustion interne selon la revendication 6, dans lequel La sortie de gaz annulaire (40) débouche dans une extrémité axiale du joint à labyrinthe (22).

9. Moteur à combustion interne selon la revendication 1, dans lequel le joint à labyrinthe (22) et le moyen de soufflage (28) sont disposés axialement l'un après l'autre dans une direction d'un axe longitudinal (A) de l'agencement d'étanchéité d'arbre (16).
